# EUROPÄISCHE PATENTSCHRIFT

(11) **EP 2 660 355 B1**
(45) Veröffentlichungstag und Bekanntmachung des Hinweises auf die Patenterteilung: **31.12.2014**
(21) Anmeldenummer: 12003241.2
(22) Anmeldetag: 03.05.2012
(51) Int. Cl.: C23C 18/16, C25D 17/08, B29C 65/00, B29C 65/44, B29C 65/76

(54) **Verfahren zum Beschichten in einem Bad**
Process for coating in a bath
Procédé de revêtement dans un bain

(43) Veröffentlichungstag der Anmeldung: 06.11.2013
(73) Patentinhaber: Franz Oberflächentechnik GmbH & Co. KG, 82538 Geretsried (DE)
(72) Erfinder: Franz, Wolf-Dieter, 82538 Geretsried (DE)
(74) Vertreter: Szynka, Dirk

(56) Entgegenhaltungen:
- DE-A1- 19 851 130

## Beschreibung

Die vorliegende Erfindung bezieht sich auf ein Verfahren zur Beschichtung einer Mehrzahl Bauteile mit einer metallischen Schicht in einem Bad.

Eine metallische Beschichtung von Bauteilen findet in den unterschiedlichsten Bereichen Anwendung; so kann beispielsweise ein metallisches Bauteil durch Verzinken vor Korrosion geschützt werden. Andererseits ist es auch möglich, ein Kunststoffbauteil metallisch zu beschichten, was beispielsweise hinsichtlich einer Abriebfestigkeit der Oberfläche beziehungsweise aus ästhetischen Gründen von Interesse sein kann.

Die DE 198 51 130 A1 betrifft ein Verfahren und eine Anlage zum chemisch/galvanisch Beschichten von Kunststoffbauteilen, wobei die Kunststoffbauteile vor der Beschichtung miteinander verbunden werden, entweder unmittelbar oder über ein Kunststoff-Tragelement. Die Kunststoff-Kunststoff-Verbindung wird dabei entweder mittels Ultraschall oder über einen Klebstoff hergestellt.

Der vorliegenden Erfindung liegt die Aufgabe zugrunde, ein vorteilhaftes Verfahren zum Beschichten einer Mehrzahl Bauteile mit einer metallischen Schicht in einem Bad anzugeben.

Erfindungsgemäß löst diese Aufgabe ein Verfahren gemäß Anspruch 1.

Die so verbundenen, später aber wieder zu trennenden, Bauteile können vorteilhafterweise bei der anschließenden Beschichtung in einem Bad gemeinsam gehandhabt, also beispielsweise gegriffen, dem Bad zugeführt und wieder herausgenommen werden. Die Bauteile können also zeitgleich beschichtet werden, was aufgrund der Zeitersparnis gegenüber einer sequentiellen Bearbeitung auch in ökonomischer Hinsicht vorteilhaft ist.

Ein Bauteil wird mit den übrigen Bauteilen dabei über eine "Schmelzverbindung" verbunden, also eine unter Aufbringung von Wärme und/oder Druck hergestellte, jedenfalls bei Kräften unterhalb einer Trennkraft unlösbare Verbindung; beim "Schmelzverbinden" schmilzt zumindest eines von zwei so miteinander verbundenen Teilen in einem Kontaktbereich an, wobei die unlösbare Verbindung mit dem Erstarren entsteht. Die Bauteile sind somit, etwa verglichen mit Bauteilen, die jeweils einzeln in ein gemeinsames Gestell lediglich eingehängt werden, sicher miteinander verbunden, was die Gefahr eines Verlusts von Bauteilen während der anschließenden Beschichtung, etwa beim Eintauchen in ein Bad, entsprechend verringert.

Im Anschluss an die chemische und/oder galvanische Beschichtung in dem Bad werden die Bauteile wieder voneinander getrennt. Selbstverständlich können auch eine Mehrzahl Bäder vorgesehen sein und kann eine Schichtenfolge abgeschieden werden. Das voneinander Trennen der Bauteile kann, muss jedoch nicht durch Aufbrechen der Schmelzverbindungen erfolgen. Insoweit wird auch auf den in bevorzugter Ausgestaltung vorgesehenen Abtrennbereich und die abhängigen Ansprüche verwiesen.

In diesen und der folgenden Beschreibung finden sich auch weitere bevorzugte Ausgestaltungen, wobei die einzelnen Merkmale auch in anderer Kombination erfindungswesentlich sein können und implizit stets sowohl das Verfahren als auch ein entsprechendes Erzeugnis offenbart sein sollen.

Vorzugsweise werden mit dem erfindungsgemäßen Verfahren Kunststoffbauteile beschichtet, und zwar insbesondere Kunststoffspritzgussteile aus besonders bevorzugt glasfaserverstärktem Kunststoff, insbesondere aus glasfaserverstärktem Polyarylamid. Kunststoffbauteile können beispielsweise gegenüber Metallbauteilen etwa auch bei geringerer Temperatur schmelzverbunden werden, was die Integrierbarkeit in ein Beschichtungsverfahren gegebenenfalls erleichtert.

Erfindungsgemäß wird ein die Bauteile miteinander verbindender Steg vorgesehen und ein jedes Bauteil über eine eigene Schmelzverbindung mit diesem Steg verbunden. Mit einem solchen Steg aus einem beispielsweise starren Material kann den Bauteilen z. B. ein gewisser Abstand zueinander vorgegeben werden, was bei der anschließenden Beschichtung vorteilhaft sein kann, auch hinsichtlich des Potenzialfeldes in einem galvanischen Bad. Zudem kann ein die Bauteile zueinander in Position haltender Steg vorteilhafterweise die Gefahr reduzieren helfen, dass sich diese tion haltender Steg vorteilhafterweise die Gefahr reduzieren helfen, dass sich diese gegenseitig verkratzen.

Ein Steg kann den so miteinander verbundenen Bauteilen auch eine gewisse mechanische Stabilität verleihen, was die Mehrzahl Bauteile auch besser handhabbar machen kann.

Erfindungsgemäß wird ein Steg aus metallischem Material vorgesehen, was neben einer guten mechanischen Stabilität auch wegen der elektrisch leitenden Verbindung der Bauteile vorteilhaft sein kann; bei einer galvanischen Abscheidung liegen die Bauteile dann auf einem gemeinsamen Potenzial, und es muss beispielsweise lediglich der Steg kathodisch kontaktiert und müssen nicht alle Bauteile einzeln kontaktiert werden.

Dies kann im Übrigen sogar in Verbindung mit Kunststoffbauteilen gelten, wenn diese nämlich beispielsweise in einem Bad chemisch beschichtet werden (gegebenenfalls nach einer Vorbehandlung, etwa durch Beizung mit Chromsäure), beispielsweise mit Nickel. Wenngleich dabei auch ein Steg aus Kunststoffmaterial mitbeschichtet würde, ist für diesen dennoch metallisches Material bevorzugt. So haben die Erfinder festgestellt, dass bei den üblicherweise geringen Metallschichtdicken ein Steg aus Kunststoffmaterial eine große Oberfläche haben müsste, um eine elektrisch leitende Verbindung ohne wesentlichen Potenzialabfall zu gewährleisten.

Vorzugsweise wird als Steg ein metallischer Draht vorgesehen, insbesondere ein Stahldraht. Dieser kann vorteilhafterweise kostengünstig als Meterware verfügbar sein; es wird dann also beispielsweise ein Stück in der benötigten Länge abgewickelt, abgelängt und gerichtet, sodass die Bauteile mit einem stabilen geraden Stück Draht verbunden werden. Als geeignet hat sich ein Drahtdurchmesser von in dieser Reihenfolge zunehmend bevorzugt mindestens 0,5 mm, 0,6 mm, 0,7 mm, 0,8 mm, 0,9 mm erwiesen.

Selbstverständlich kann auch ein sich etwa im Bereich der Bauteile gerade erstreckender Draht in einem anderen Bereich gebogen bzw. geknickt verlaufen; so wird der Draht in bevorzugter Ausgestaltung sogar an einem Ende zur Ausbildung einer Aufhängevorrichtung umgebogen. Mit dieser Aufhängevorrichtung können die Mehrzahl Bauteile in ein Gestell gehängt und in diesem einem Bad zugeführt werden, beispielsweise auch gemeinsam mit weiteren, ebenfalls miteinander schmelzverbundenen Bauteilen. Verglichen mit einzeln gehängten Bauteilen sind so deutlich weniger "Hängvorgänge", die in der Regel manuell vorgenommen werden, notwendig.

Generell kann bei erfindungsgemäß verbundenen Bauteilen die Handhabbarkeit verbessert sein, weil beispielsweise nicht die Bauteile selbst angefasst werden müssen, sondern der Steg gegriffen werden kann. Die Gefahr des Entstehens von Kratzern, die beispielsweise beim Be- und Entstücken verursacht werden können, beziehungsweise auch von Fingerabdrücken lässt sich so vorteilhafterweise reduzieren.

Generell kann das erfindungsgemäße Verbinden insbesondere auch in Verbindung mit mehrschrittigen Beschichtungsverfahren Vorteile bieten, weil diese oftmals nicht mit einem einzigen Typ Gestell umgesetzt werden können. So muss etwa bei einer Vorbehandlung von Kunststoffbauteilen durch Beizung in Chromsäure üblicherweise ein Gestell aus Metall verwendet werden, auch wegen der mechanischen Stabilität. Würden die Bauteile jedoch auf demselben Metallgestell verchromt, müsste zum Erreichen einer akzeptablen Abscheidungsrate ein entsprechend hoher Strom eingestellt werden; aus diesem Grund werden die Bauteile in der Regel nach einer Vorbehandlung, etwa auch nach einer ersten chemischen Abscheidung, auf ein isoliertes Gestell umgehängt.

In der Praxis kann also neben einem ersten Bestücken eines Gestells auch ein Umhängen notwendig sein, was mit erfindungsgemäß schmelzverbundenen Bauteilen wiederum schneller geht. Die mögliche Zeitersparnis vervielfacht sich entsprechend.

Die Schmelzverbindung wird durch Wärme hergestellt, wobei selbstverständlich gleichzeitig auch ein Druck aufgebracht werden kann, was sogar bevorzugt ist. Die Wärme kann etwa durch Strahlung (vergleiche Laserschweißen), chemisch, durch Reibung und/oder elektrisch erzeugt werden.

Erfindungsgemäß wird ein Steg aus metallischem Material mit einem Kunststoffbauteil unter Wärme (und Druck) verschmolzen, und zwar indem der Steg selbst erwärmt wird. Der so erwärmte Steg kann das Kunststoffmaterial lokal in einem Kontaktbereich anschmelzen, sodass dieses nach einem Erkalten an dem Steg haftet, etwa auch unter Ausbildung eines gewissen Formschlusses. Ein solcher entsteht beispielsweise, wenn der Steg ein Stück weit in das Kunststoffbauteil einschmilzt, beispielsweise mindestens 10 %, 25 % beziehungsweise 50 % seines Durchmessers.

Erfindungsgemäß wird der Steg aus metallischem Material erwärmt, indem er mit elektrischem Strom beaufschlagt wird, wobei der Steg vorzugsweise beidseits der herzustellenden Schmelzverbindung kontaktiert wird. Dies kann beispielsweise eine gute Einstellbarkeit ermöglichen, weil über eine Stromquelle ein Stromwert mit geringem Aufwand vorgegeben werden kann. Dabei hat sich für die Ausbildung einer Schmelzverbindung zwischen metallischem Steg und Kunststoffspritzgussteil eine Stromdichte von mindestens 0,5•10⁶ A/m², in dieser Reihenfolge zunehmend bevorzugt mindestens 1•10⁶ A/m², 2•10⁶ A/m², 3•10⁶ A/m², 4•10⁶ A/m², 5•10⁶ A/m², als vorteilhaft erwiesen, und zwar auf Grundlage von an einem 1 mm Stahldraht durchgeführten Versuchen.

Die Beaufschlagung mit Strom erfolgt in bevorzugter Ausgestaltung für mindestens 5 s, in dieser Reihenfolge zunehmend bevorzugt mindestens 10 s, 15 s, 20 s, und von dieser Untergrenze unabhängig für höchstens 120 s, in dieser Reihenfolge zunehmend bevorzugt höchstens 100 s, 80 s, 60 s. Die Obergrenze kann beispielsweise aufgrund prozessökonomischer Erwägungen entsprechend limitiert sein und die Untergrenze etwa als die Zeitdauer ermittelt werden, nach welcher sich reproduzierbar eine gute Schmelzverbindung ausgebildet hat.

Generell werden die Bauteile in bevorzugter Ausgestaltung gleichzeitig mit dem Steg schmelzverbunden, etwa indem sie gleichzeitig mit einem entsprechend erwärmten metallischen Steg in Kontakt gebracht werden.

Es können also beispielsweise die Bauteile und ein bereits stromdurchflossener Draht in Kontakt gebracht und so unmittelbar schmelzverbunden werden; vorzugsweise wird jedoch ein zunächst nicht stromdurchflossener Draht in Kontakt mit den Bauteilen gebracht und der Draht erst dann mit Strom beaufschlagt, sodass zu den damit in Kontakt befindlichen Bauteilen dann gleichzeitig eine Schmelzverbindung hergestellt wird (es soll also anfangs jedenfalls kein zu einer merklichen Erwärmung des Drahts führender Strom fließen).

In bevorzugter Ausgestaltung werden die Bauteile über einen weiteren Steg miteinander verbunden, was etwa die mechanische Stabilität bzw. auch die leitende Verbindung der Bauteile verbessern kann. Dabei werden die beiden Stege vorzugsweise gleichzeitig mit der Mehrzahl Bauteile verschmolzen, und zwar unter einem gewissen Kontaktdruck (zusätzlich zu einer Aufbringung von Wärme).

Es werden also beispielsweise die Bauteile zunächst so angeordnet, dass sie dieselbe Orientierung haben, also zueinander allein translatorisch verschoben sind (dies ist generell bevorzugt, auch wenn nur ein Steg vorgesehen wird). Die Drähte sind dabei oder werden anschließend so angeordnet, dass ein jedes Bauteil an einer Seite von dem einen und an einer entgegengesetzten Seite von dem anderen Draht berührt wird; das Schmelzverbinden erfolgt dann wiederum durch Beaufschlagung der Drähte mit Strom, vorzugsweise beider Drähte gleichzeitig. Zwischen Draht und Bauteil besteht dabei auch ein gewisser Kontaktdruck.

Insoweit ist es im Falle von zwei Stegen bevorzugt, dass der eine Steg ein Gegenlager für einen über den anderen Steg aufgebrachten Kontaktdruck bildet. In anderen Worten werden die Bauteile beim Schmelzverbinden mit dem einen Steg gegen den anderen gedrückt. So kann auf vergleichsweise einfache Art sichergestellt werden, dass der Kontaktdruck beim Schmelzverbinden für beide Stege im Wesentlichen derselbe ist.

Im Allgemeinen ist es auch möglich, die Schmelzverbindung an dem später auch in dieser Form benutzten Bauteil selbst vorzusehen, etwa im Falle eines Bauteils mit dekorativer Sichtfläche an einer dieser entgegengesetzten Rückseite. Vorzugsweise wird die Schmelzverbindung jedoch in einem Abtrennbereich vorgesehen, der von dem übrigen Bauteil im Anschluss an die Beschichtung zusammen mit dem Steg abgetrennt wird. Zwischen Abtrennbereich und übrigem Bauteil kann beispielsweise eine Art Sollbruchstelle vorgesehen werden, z. B. ein Bereich geringerer Materialstärke wie etwa eine Kerbe, was auch das Abtrennen des Stegs erleichtert.

Weiter bevorzugt ist im Falle eines Sprltzgussteils die Schmelzverbindung in einem Abtrennbereich vorgesehen, der von in einem Zuführkanal, über den beim Spritzgießen das Spritzgussmaterial zugeführt wurde, erstarrtem Spritzgussmaterial gebildet ist. Ist zwischen diesem "Ausschussbereich" und dem Bauteil beispielsweise eine Sollbruchstelle vorgesehen, kann der Steg vorteilhafterweise auch besonders einfach abgetrennt werden. Dies kann beispielsweise auch in einer anderen Fertigungslinie als die Beschichtung erfolgen, was das Vermeiden von Fehlern reduzieren helfen kann; etwa die Gefahr eines Verkratzens lässt sich so weiter reduzieren.

Erfindungsgemäß miteinander verbundene Bauteile können ferner den Vorteil bieten, dass nach dem Beschichten und vor dem Auftrennen noch eine Zuordenbarkeit der Bauteile erhalten ist und beispielsweise Bauteil-zu-Bauteil-Schwankungen bei einer Qualitätskontrolle besser erkannt werden können.

Im Folgenden wird die Erfindung anhand eines Ausführungsbeispiels näher erläutert, wobei die einzelnen Merkmale auch in anderer Kombination erfindungswesentlich sein können und implizit sämtliche Kategorien betreffen.

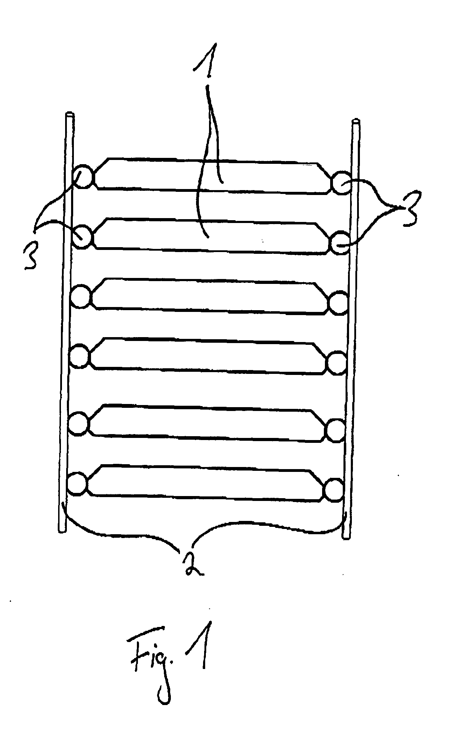

Figur 1 zeigt mit zwei Drähten schmelzverbundene Bauteile in Aufsicht.

In der schematischen Darstellung gemäß Figur 1 sind sechs Kunststoffspritzgussteile 1 aus glasfaserverstärktem Polyarylamid über zwei Drähte 2 miteinander verbunden. Bei den Bauteilen 1 handelt es sich um Lamellen eines für den Innenraum eines Automobils vorgesehenen Lüftungsgitters, die in der Figur in Aufsicht, also auf eine Oberseite der Lamellen blickend, abgebildet sind.

An beiden Seiten jeder Lamelle, also in der Figur links und rechts davon, findet sich durch die Herstellung im Spritzgussverfahren bedingt Ausschussmaterial. Dabei handelt es sich um in einem Zuführkanal erstarrtes Kunststoffmaterial, welches vor dem Zusammensetzen des Lüftungsgitters vom übrigen Bauteil 1 abgetrennt wird.

In diesem Abtrennbereich 3 wird erfindungsgemäß eine Schmelzverbindung zwischen dem jeweiligen Bauteil 1 und dem die Bauteile 1 verbindenden Draht 2 hergestellt. Im Anschluss an eine Beschichtung der Bauteile 1 kann so der Draht 2 gemeinsam mit den Abtrennbereichen 3 von den Bauteilen 1 abgetrennt werden. Währens des Beschichtens in einem Bad sind die Bauteile 1 über die Drähte 2 also hinreichend sicher miteinander verbunden, anschließend können sie aufgrund der zwischen Abtrennbereich 3 und Bauteil 1 vorgesehen Sollbruchstelle mit akzeptablem Aufwand von den Drähten 2 gelöst werden.

Zum Verbinden der Bauteile 1 werden diese zunächst wie in Figur 1 abgebildet angeordnet, und zwar durch Einsetzen in einen hier nicht gezeigten Rahmen mit den Bauteilen 1 entsprechenden Ausnehmungen. Anschließend werden die Abtrennbereiche 3 mit den Drähten 2 in Kontakt gebracht, wobei über einen der beiden Drähte 2 ein Kontaktdruck aufgebracht wird und sich zwischen dem dabei ein Gegenlager bildenden anderen Draht 2 und den Bauteilen 1 derselbe Kontaktdruck einstellt.

Anschließend werden die Drähte 2 mit Strom beaufschlagt, wozu entweder eine gemeinsame oder auch jeweils eine eigene Stromquelle vorgesehen werden kann. Der Stahldraht mit einem Durchmesser von 1 mm wird dabei mit einem Strom von 20 A beaufschlagt, und zwar für ca. 30 s. Der infolge des Stromdurchflusses erhitzte Draht 2 schmilzt in die Abtrennbereiche 3 der Bauteile 1 ein Stück weit ein. Es hat sich dann eine Schmelzverbindung ausgebildet.

Die beiden Drähte 2 sind vorzugsweise an einem Ende geknickt (in der schematischen Darstellung nicht gezeigt), was das Einhängen in ein Gestell erleichtert. Im Anschluss an das Schmelzverbinden werden die Bauteile 1 für die Beschichtung zunächst in ein Metallgestell gehängt. Die Bauteile 1 werden dann in Chromsäure gebeizt und im Anschluss an eine Palladium-Bekeimung chemisch, also in einem Bad, jedoch außenstromlos, mit Nickel beschichtet. Dann wird die chemische Nickelschicht galvanisch verstärkt und werden die Bauteile 1 schließlich galvanisch verchromt.

Vor dem Galvanikprozess werden die Bauteile dabei von dem Metallgestell auf ein isoliertes Gestell umgehängt, wobei die schmelzverbundenen Bauteile 1 zeitsparend als Ganzes umgehängt werden können.

## Patentansprüche

1. Verfahren zum Beschichten einer Mehrzahl Bauteile (1) mit einer metallischen Schicht in einem Bad,
bei welchem die Mehrzahl Bauteile (1) vor dem Beschichten in dem Bad miteinander verbunden werden,
wobei ein jedes Bauteil (1) der Mehrzahl Bauteile (1) über eine Schmelzverbindung mit den übrigen Bauteilen (1) verbunden wird,
die. Mehrzahl Bauteile (1) dann in dem Bad beschichtet und anschließend wieder voneinander getrennt werden,
wobei die Mehrzahl Bauteile (1) über einen Steg (2) miteinander verbunden werden und die Schmelzverbindung hergestellt wird, indem der Steg (2) erwärmt wird,
**dadurch gekennzeichnet, dass**
der Steg (2) aus metallischem Material vorgesehen ist und der Steg (2) aus metallischem Material erwärmt wird, indem er mit Strom beaufschlagt wird.

2. Verfahren nach Anspruch 1, bei welchem die Mehrzahl Bauteile (1) Kunststoffbauteile (1) sind, insbesondere Kunststoffspritzgussteile (1) aus vorzugsweise glasfaserverstärktem Kunststoff.

3. Verfahren nach Anspruch 1 oder 2, bei welchem jedes Bauteil (1) über eine eigene Schmelzverbindung mit dem Steg (2) verbunden wird.

4. Verfahren nach einem der vorstehenden Ansprüche, bei welchem als Steg (2) aus metallischem Material ein Draht (2) vorgesehen wird, insbesondere ein Stahldraht (2).

5. Verfahren nach Anspruch 4, bei welchem der Draht (2) an einem Ende zur Ausbildung einer Aufhängevorrichtung umgebogen wird oder ist.

6. Verfahren nach einem der vorstehenden Ansprüche, bei welchem die Stromdichte in dem Steg (2) aus metallischem Material während der Ausbildung der Schmelzverbindung mindestens 0,5•10⁶ A/m² beträgt.

7. Verfahren nach einem der vorstehenden Ansprüche, bei welchem der Steg (2) aus metallischem Material mindestens 5 s und höchstens 120 s mit Strom beaufschlagt wird.

8. Verfahren nach einem der vorstehenden Ansprüche, bei welchem ein jedes Bauteil (1) über eine eigene Schmelzverbindung mit dem Steg (2) verbunden wird und diese Schmelzverbindungen gleichzeitig hergestellt werden.

9. Verfahren nach einem der vorstehenden Ansprüche, bei welchem die Schmelzverbindung zwischen Bauteil (1) und Steg (2) in einem Abtrennbereich (3) des Bauteils (1) vorgesehen wird, der von dem übrigen Bauteil (1) im Anschluss an die Beschichtung in dem Bad zusammen mit dem Steg (2) abgetrennt wird.

10. Verfahren nach Anspruch 9, bei welchem das Bauteil (1) ein Spritzgussteil (1) ist und als Abtrennbereich (3) in einem Zuführkanal, über den beim Spritzgießen Spritzgussmaterial zugeführt wurde, erstarrtes Spritzgussmaterial vorgesehen ist.

11. Verfahren nach einem der vorstehenden Ansprüche, bei welchem die Mehrzahl Bauteile (1) über einen ersten und einen zweiten Steg (2) miteinander verbunden werden, wobei der erste und der zweite Steg (2) gleichzeitig unter Aufbringung eines Drucks mit der Mehrzahl Bauteile (1) verschmolzen werden und der Druck über einen der Stege (2) aufgebracht wird und der andere der Stege (2) dabei ein Gegenlager bildet.

## Claims

1. A method for coating a plurality of parts (1) with a metallic layer in a bath, wherein said plurality of parts (1) are connected with each other prior to said coating in said bath,
wherein each part (1) of said plurality of parts (1) is connected to the remaining parts (1) by a melt-type connection,
said plurality of parts (1) being coated in said bath then and being separated from each other thereafter,
wherein said plurality of parts (1) are connected with each other by a bar (2), said melt-type connection being made by heating up said bar (2),
**characterized in that**
said bar (2) is made of a metallic material, wherein said bar (2) made of said metallic material is heated up by applying a current.

2. The method according to claim 1, wherein said plurality of parts (1) are synthetic material parts (1), in particular injection moulded synthetic material parts (1), preferably made of a glass fibre reinforced synthetic material.

3. The method according to claim 1 or 2, wherein each part (1) is connected to said bar (2) by an individual melt-type connection.

4. The method according to one of the preceding claims, wherein said bar (2) made of said metallic material is a wire (2), in particular a steel wire (2).

5. The method according to claim 4, wherein said wire (2) has a bent and or is bent at an end, for forming a suspension device.

6. The method according to one of the preceding claims, wherein the current density in said bar (2) made of said metallic material is at least 0,5x10⁶ A/m² during a formation of said melt-type connection.

7. The method according to one of the preceding claims, wherein said current is applied to said bar (2) made of said metallic material for 5 s at a minimum and 120 s at maximum.

8. The method according to one of the preceding claims, wherein each part (1) is connected to said bar (2) by an individual melt-type connection, wherein said melt-type connections are made at the same time.

9. The method according to one of the preceding claims, wherein said melt-type connection between said part (1) and said bar (2) is provided in a separating region (3) of said part (1), which is separated from the remaining part (1) subsequently to said coating in said bath, namely is separated together with said bar (2).

10. The method according to claim 9, wherein said part (1) is an injection moulded part (1), wherein said separating region (3) is injection mould material which hardened in a supply channel via which the injection mould material has been supplied during said injection moulding.

11. The method according to one of the preceding claims, wherein said plurality of parts (1) are connected with each other by a first and a second bar (2), wherein said first and said second bar (2) are simultaneously connected with said plurality of parts (1) by applying a pressure, wherein said pressure is applied by one of said bars (2) while the other one of said bars (2) serves as a counter-bearing.

## Revendications

1. Procédé de revêtement d'une pluralité de composants (1) par une couche métallique dans un bain,
dans lequel la pluralité de composants (1) sont reliés entre eux avant le revêtement dans le bain, chacun des composants (1) de la pluralité de composants (1) étant relié aux autres composants (1) par le biais d'une liaison par fusion,
la pluralité de composants (1) sont ensuite revêtus dans le bain puis de nouveau séparés les uns des autres,
la pluralité de composants (1) étant reliés entre eux par le biais d'une traverse (2) et la liaison par fusion étant produite par élévation de la température de la traverse (2),
**caractérisé en ce que**
la traverse (2) est prévue en matière métallique et l'élévation de la température de la traverse (2) en matière métallique s'effectue par application de courant électrique.

2. Procédé selon la revendication 1, dans lequel la pluralité de composants (1) sont des composants en matière plastique (1), notamment des pièces moulées par injection en matière plastique (1) de préférence renforcées de fibres de verre.

3. Procédé selon la revendication 1 ou 2, dans lequel chaque composant (1) est relié à la traverse (2) au moyen d'une liaison par fusion propre.

4. Procédé selon l'une des revendications précédentes, dans lequel il est prévu un fil (2) en guise de traverse (2) en matière métallique, notamment un fil d'acier (2).

5. Procédé selon la revendication 4, dans lequel le fil (2) était ou est replié à une extrémité pour constituer un dispositif de suspension.

6. Procédé selon l'une des revendications précédentes, dans lequel la densité de courant traversant la traverse (2) en matière métallique lors de la création de la liaison par fusion est d'au moins 0,5•10⁶ A/m².

7. Procédé selon l'une des revendications précédentes, dans lequel la traverse (2) en matière métallique est soumise au courant électrique pendant un minimum de 5 s et un maximum de 120 s.

8. Procédé selon l'une des revendications précédentes, dans lequel chacun des composants (1) est relié à la traverse (2) au moyen d'une liaison par fusion propre et ces liaisons par fusion sont produites simultanément.

9. Procédé selon l'une des revendications précédentes, dans lequel la liaison par fusion entre composant (1) et traverse (2) est prévue dans une zone de séparation (3) du composant (1) qui est séparée du reste du composant (1), conjointement à la traverse (2), suite au revêtement dans le bain.

10. Procédé selon la revendication 9, dans lequel le composant (1) est une pièce moulée par injection (1) et dans lequel il est prévu de la matière à mouler par injection durcie en guise de zone de séparation (3) dans un canal d'amenée ayant permis l'introduction de la matière à mouler par injection lors du processus de moulage par injection.

11. Procédé selon l'une des revendications précédentes, dans lequel la pluralité de composants (1) sont reliés entre eux au moyen d'une première et d'une seconde traverse (2), les première et seconde traverse (2) fusionnant simultanément avec la pluralité de composants (1) sous l'application d'une pression, et la pression étant appliquée sur l'une des traverses (2) tandis que l'autre des traverses (2) forme un contre-appui.
